# EUROPÄISCHE PATENTSCHRIFT

(11) **EP 0 798 834 B1**
(45) Veröffentlichungstag und Bekanntmachung des Hinweises auf die Patenterteilung: **19.12.2001**
(21) Anmeldenummer: 97103835.1
(22) Anmeldetag: 07.03.1997
(51) Int. Cl.: H02B 1/04

(54) **Anordnung zur Befestigung eines Gehäuses auf einer Befestigungsplatte**
Device for attaching a housing to a mounting plate
Dispositif d'attachement d' une boîte à une platine de montage

(30) Priorität: 30.03.1996 DE 19612843
(43) Veröffentlichungstag der Anmeldung: 01.10.1997
(73) Patentinhaber: Conti Temic microelectronic GmbH, 90411 Nürnberg (DE)
(72) Erfinder: Baur, Richard, 85276 Pfaffenhofen (DE); Fendt, Günter, 86529 Schrobenhausen (DE); Wöhrl, Alfons, 86529 Schrobenhausen (DE)
(74) Vertreter: Maute, Hans-Jürgen, Dipl.-Ing.

(56) Entgegenhaltungen:
- DE-A- 3 137 322
- DE-A- 3 408 073
- DE-U- 7 613 873

## Beschreibung

Die Erfindung betrifft eine Anordnung zur Befestigung eines Gehäuses auf einer Befestigungsplatte nach dem Oberbegriff der Patentansprüche 1 oder 8.

Aus der EP 0 293 325 A2 ist eine Anordnung zur Befestigung eines elektrotechnischen Bauelements auf einem Gerät nach dem **Stand der Technik** bekannt. Das becherförmige Gehäuse des elektrotechnischen Bauelements weist auf einer seiner Stirnflächen ein durch die Aussparung einer Befestigungsplatte hindurchsteckbares Einhakmittel auf, das nach einer Verschiebung parallel zur Oberfläche der Befestigungsplatte dieselbe hintergreift, wobei mindestens drei Einhakmittel vorgesehen sind. Zusätzlich ist im Bereich einer Seitenwandung des Gehäuses ein Arretierungselement vorgesehen, welches in Form einer Zunge als Kunststoffspritzteil einstückig an das becherförmige Gehäuse angeformt ist. Diese Zunge trägt eine in Richtung der Einhakmittel weisende Erhebung auf, welche eine senkrecht zur die Einhakmittel tragenden Stirnfläche gerichtete, eine seitliche Verschiebung sperrende Fläche besitzt. Das becherförmige Gehäuse wird mittels der Einhakmittel in die zugehörigen Öffnungen eingeführt und solange parallel zur Oberfläche der Befestigungsplatte verschoben, bis die an der Zunge befestigte Erhebung in eine zugehörige Ausnehmung einschnappt.

Diese Anordnung weist den **Nachteil** auf, daß sich das Gehäuse des elektrotechnischen Bauelements leicht aus der Verbindung mit der Befestigungsplatte lösen kann. Bei der Montage einer solchen Anordnung in einem Kraftfahrzeug besteht daher die Gefahr, daß aufgrund der während des Betriebs des Kraftfahrzeuges auftretenden Erschütterungen das Gehäuse sich selbständig von der Befestigungsplatte löst. Außerdem muß dieses Gehäuses bei der Montage so bewegt werden, daß die eine Ebene aufspannenden Einhakmittel gleichzeitig in die Öffnungen der Befestigungsplatte eintauchen, was eine exakte Justierung und einen hohen Montageaufwand erfordert.

Ferner ist aus der DE 78 28 960 U1 ein haubenförmiges Gehäuse zur Aufnahme von Schaltelementen, insbesondere Schalter für Frontplattenmontage in Verbindung mit Leiterplatten bekannt. Die Innenabmessungen dieses Gehäuses entsprechen den äußeren Anmessungen des aufzunehmenden Schaltelementes, so daß dieses zusammen mit dem Gehäuse auf die Leiterplatte montierbar ist. Hierzu weist das Gehäuse im Bandbereich der Öffnung Führungsstifte oder Rastelemente auf, die in entsprechende Bohrungen der Leiterplatte einführbar sind. Die für die Funktion der Rastelemente erforderliche elastische Verformung der diese Rastelemente tragenden Seitenwände ist aufgrund der becherförmigen Ausbildung des Gehäuses gegeben. Jedoch ist dieses bekannte Gehäuse nicht für Kraftfahrzeuganwendungen geeignet, da es keine spritzwassergeschützte Ausführung darstellt.

Schließlich ist es bekannt, elektronische Baugruppen aufnehmende Gehäuse mittels Schrauben, Nieten oder Schweißverbindungen auf einer Befestigungsplatte zu montieren. Insbesondere besteht bei der Montage eines solchen Gehäuses in einem Kraftfahrzeug die Anforderung, daß die Befestigung zwischen dem Gehäuse und der Befestigungsplatte erschütterungsfest ausgeführt sein muß, hauptsächlich auch dann, wenn beispielsweise dieses Gehäuse in der Tür eines Kraffahrzeuges untergebracht ist. Die Durchführung einer solchen Montage mittels Schrauben, Nieten oder einer Schweißverbindung ist aufwendig und führt so zu hohen Montagekosten.

Es ist deshalb **Aufgabe der Erfindung,** eine Anordnung der eingangs genannten Art anzugeben, mit der die oben genannten Nachteile vermieden werden, die einfach zu realisieren und kostengünstig herstellbar ist und bei der zur Befestigung des Gehäuses auf der Befestigungsplatte keine Schrauben oder Nieten bzw. Schweißverbindungen erforderlich sind.

Diese Aufgabe wird **gelöst** durch eine Anordnung zur Befestigung eines Gehäuses auf einer Befestigungsplatte nach den kennzeichnenden Merkmalen der Ansprüche 1 oder 8.

Vorteilhafte Weiterbildungen der Erfindung sind in den Unteransprüchen beschrieben.

Die **Vorteile** der Erfindung liegen darin, daß durch den Klemmhaken des Gehäuses und die Klemmtasche der Befestigungsplatte ohne zusätzliche Hilfsmittel und Werkzeuge eine spielfreie und somit sehr exakte Montage erreicht wird, was insbesondere bei richtungsorientierten Einrichtungen, wie Airbag-Auslösevorrichtung und Überrollsensor, gefordert ist. Durch den Wegfall von Schraubverbindungen werden Material- und Fertigungskosten eingespart.

Ein **Ausführungsbeispiel** der Erfindung ist nachstehend ausführlich erläutert und anhand der Figuren dargestellt.

Es zeigen
- Fig. 1:: ein Gehäuse mit Klemmhaken und eine zugehörige Befestigungsplatte mit Klemmtasche bei der Montage,
- Fig. 2:: das auf der Befestigungsplatte fixierte Gehäuse aus Fig. 1 und
- Fig. 3:: eine vorteilhafte Weiterbildung des Gehäuses und der Befestigungsplatte nach Fig. 1 und 2.

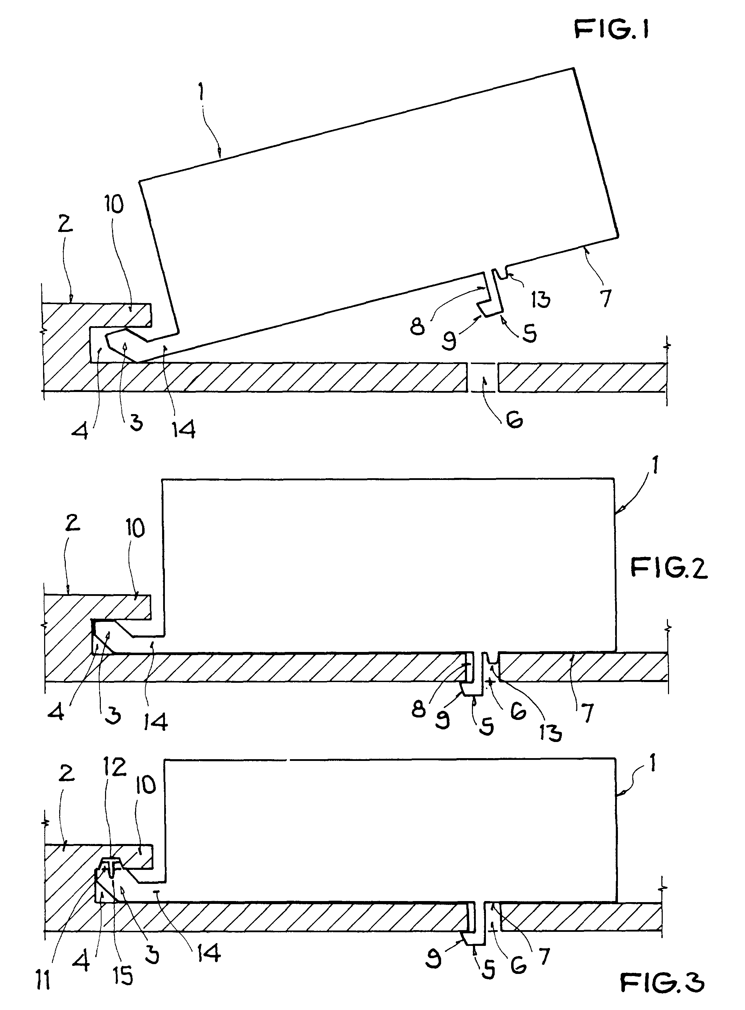

In den Fig. 1 und 2 ist ein mit dem Bezugszeichen **1** bezeichnetes Gehäuse, vorzugsweise aus Kunststoff und mit quaderförmiger Gestalt, auf eine meist metallene Befestigungsplatte **2** zu montieren. Hierzu sind am Gehäuse **1** auf der der Befestigungsplatte **2** zugewandten Unterseite **7** ein oder mehrere erfindungsgemäße Klemmhaken **3** angeordnet, die in Klemmtaschen **4** der Montageplatte **2** eingreifen. Jeder Klemmhaken **3** weist infolge einer freien Biegelänge eine integrierte Biegefeder **14** auf, die für eine Verspannkraft zwischen Gehäuse **1** und Befestigungsplatte **2** sorgt. Diese Verspannkraft ist jedoch so gering, daß es zu keiner Verformung des Gehäuses **1** oder der darin angeordneten, meist elektronischen Bauelemente kommt.

Außerdem weist das Gehäuse **1** einen oder mehrere Schnapphaken **5** auf, die durch Öffnungen **6** in der Montageplatte **2** hindurchgeführt werden können. Neben jedem Schnapphaken **5** ist eine kegelstumpfförmige Erhebung **13** angeordnet, die einerseits das Einschwenken des Gehäuses **1** erleichtert und andererseits verhindert, daß bei eingeschnapptem Schnapphaken **5** das Gehäuse **1** (in den Fig. 1 und 2 nach rechts) abgleitet.

Jeder keilförmig ausgebildete Schnapphaken **5** ist an die Gehäusefläche **7** des Gehäuses **1** angeformt und besteht aus einem elastisch verformbaren Steg **8** und einer damit verbundenen Keilfläche **9.** Während des Einrastvorgangs steht die Keilfläche **9** mit dem Rand der Öffnung **6** in Wirkverbindung und bewirkt dabei ein Ausweichen des Schnapphakens **5** aufgrund der federnden Wirkung des Steges **8,** bis der Schnapphaken **5** einrastet. Nach dem Einrasten der Keilfläche **9** in die Öffnung **6** federt der Schnapphaken **5** wieder in seine ursprüngliche Stellung zurück.

Zur Montage des Gehäuses **1** auf die Befestigungsplatte **2** wird das Gehäuse gemäß Fig. 1 in bezug auf die Ebene dieser Befestigungsplatte **2** derart schräg gestellt, daß die Klemmhaken **3** in die Klemmtasche **4** eingeführt werden können und hierbei die Nase **10** der Befestigungplatte **2** untergreifen. Anschließend wird das Gehäuse **1** in die Ebene der Befestigungsplatte **2** eingeschwenkt, wodurch gleichzeitig jeder Schnapphaken **5** unter Ausnutzung seiner federnden Wirkung in die Öffnungen **6** einrastet. Es muß gewährleistet sein, daß auch jede Erhebung **13** in die zugehörige Öffnung **6** eingeführt wird.

Die Fig. 3 zeigt eine vorteilhafte Weiterbildung des erfindungsgemäßen Gehäuses **1** nach den Fig. 1 und 2. Jeder Klemmhaken **3** weist eine konisch zulaufende, vorzugsweise runde und abgeflachte Spitze **11** auf, die in eine korrespondierende Vertiefung **12** der Nase **10** eingreift. Die Spitzen **11** können jedoch ebenso einen anderen als einen runden Querschnitt aufweisen, zum Beispiel einen dreieckigen oder viereckigen Querschnitt. Die Anordnung kann zudem auch vertauscht sein, so daß jeder Klemmhaken **3** eine vorzugsweise konische Vertiefung und die Nase **10** an entsprechender Stelle eine korrespondierende Spitze aufweist. Durch alle derartigen Anordnungen kommt zwischen dem Gehäuse **1** und der Befestigungsplatte **2** ein Formschluß zustande, der eine spielfreie Montage ohne Abgleich ermöglicht.

Mittels eines in die konische Spitze **11** eingebrachten Einschnittes **15** wird eine totgangfreie Raststelle realisiert, da die federnden Enden der Spitze **11** für einen ständigen Kontakt zu den Seitenwänden der Vertiefung **12** sorgen.

Die bei kraftschlüssigen Verbindungen bedingte mechanische Verspannung des Gehäuses **1** und der darin angeordneten, meist elektronischen Bauelemente entfällt durch die erfindungsgemäße Anordnung. Eine Fixierung mit einer Toleranz von weniger als ±1°, wie sie beispielsweise bei der richtungsgebundenen Montage von Auslösegeräten für Insassenschutzsysteme gefordert wird, ist problemlos möglich. Zudem erreicht man mit diesem Formschluß eine zum Beispiel für Beschleunigungssensoren unabdingbare Beschleunigungsübertragung vom Fahrzeug auf den Sensor. Weiterhin erleichtert die sehr geringe Vorspannkraft in der integrieten Biegefeder **14** die Montage erheblich.

Das erfindungsgemäße Gehäuse eignet sich besonders zur Aufnahme von richtungsgebundenen Beschleunigungs- oder Überschlagsensoren und Airbag-Auslösegeräten in Kraftfahrzeugen.

## Patentansprüche

1. Anordnung zur Befestigung eines Gehäuses (1) auf einer Befestigungsplatte (2), wobei das Gehäuse (1) Schnapphaken (5) und die Befestigungsplatte (2) Öffnungen (6) zur Aufnahme der Schnapphaken (5) aufweist, **dadurch gekennzeichnet, dass** das Gehäuse (1) einen Klemmhaken (3) und die Befestigungsplatte (2) eine Klemmtasche (4) zur Aufnahme des Klemmhakens (3) aufweist und dass zur Fixierung des Gehäuses (1) zwischen Klemmhaken (3) und Klemmtasche (4) ein Formschluss mittels einer oder mehrerer Spitzen (11) und korrespondierender Vertiefungen (12) herbeigeführt ist.

2. Anordnung nach Anspruch 1, **dadurch gekennzeichnet, dass** die Spitzen (11) in den Klemmhaken (3) und die korrespondierenden Vertiefungen (12) in den Klemmtaschen (4) angeordnet sind.

3. Anordnung nach Anspruch 1, **dadurch gekennzeichnet, dass** die Spitzen (11) in den Klemmtaschen (4) und die korrespondierenden Vertiefungen (12) in den Klemmhaken (3) angeordnet sind.

4. Anordnung nach einem der Ansprüche 1 bis 3, **dadurch gekennzeichnet, dass** die Spitzen (11) abgeflacht und konisch sind.

5. Anordnung nach einem der Ansprüche 1 bis 3, **dadurch gekennzeichnet, dass** die Spitzen (11) einen kreisförmigen Querschnitt aufweisen.

6. Anordnung nach einem der Ansprüche 1 bis 3, **dadurch gekennzeichnet, dass** die Spitzen (11) einen dreieckigen oder viereckigen Querschnitt aufweisen.

7. Anordnung nach einem der Ansprüche 1 bis 6, **dadurch gekennzeichnet, dass** in die Spitzen (11) ein Einschnitt (15) eingebracht ist.

8. Anordnung zur Befestigung eines Gehäuses (1) auf einer Befestigungsplatte (2), wobei das Gehäuse (1) Schnapphaken (5) und die Befestigungsplatte (2) Öffnungen (6) zur Aufnahme der Schnapphaken (5) aufweist, **dadurch gekennzeichnet, dass** das Gehäuse (1) einen Klemmhaken (3) und die Befestigungsplatte (2) eine Klemmtasche (4) zur Aufnahme des Klemmhakens (3) aufweist, dass neben jedem Schnapphaken (5) eine kegelstumpfförmige Erhebung (13) angeordnet ist und dass zur Fixierung des Gehäuses (1) einerseits zwischen einem Klemmhaken (3) und der zugehörigen Klemmtasche (4) und andererseits zwischen einer Erhebung (13) und der zugehörigen Öffnung (6) ein Formschluss herbeigeführt ist.

9. Verwendung der Anordnung nach einem der vorangehenden Ansprüche zur Aufnahme richtungsgebundener Beschleunigungs- oder Überschlagsensoren bei Kraftfahrzeugen.

## Claims

1. Arrangement for fastening a housing (1) on a mounting plate (2), wherein the housing (1) has catch hooks (5) and the mounting plate (2) has openings (6) to receive the catch hooks (5), **characterised in that** the housing (1) has a clamping hook (3) and the mounting plate (2) has a clamping cavity (4) to receive the clamping hook (3), and that, in order to fix the housing (1), a form closure is generated between the clamping hook (3) and clamping cavity (4) by means of one or more spikes (11) and corresponding depressions (12).

2. Arrangement according to Claim 1, **characterised in that** the spikes (11) are disposed in the clamping hooks (3) and the corresponding depressions (12) in the clamping cavities (4).

3. Arrangement according to Claim 1, **characterised in that** the spikes (11) are disposed in the clamping cavities (4) and the corresponding depressions (12) in the clamping hooks (3).

4. Arrangement according to one of Claims 1 to 3, **characterised in that** the spikes (11) are flattened and conical.

5. Arrangement according to one of Claims 1 to 3, **characterised in that** the spikes (11) have a circular cross-section.

6. Arrangement according to one of Claims 1 to 3, **characterised in that** the spikes (11) have a triangular or square cross-section.

7. Arrangement according to one of Claims 1 to 6, **characterised in that** an incision (15) is made in the spikes (11).

8. Arrangement for fastening a housing (1) on a mounting plate (2), wherein the housing (1) has catch hooks (5) and the mounting plate (2) has openings (6) to receive the catch hooks (5), **characterised in that** the housing (1) has a clamping hook (3) and the mounting plate (2) has a clamping cavity (4) to receive the clamping hook (3), that beside each catch hook (5) a truncated coneshaped raised portion (13) is provided, and that, in order to fix the housing (1), a form closure is generated, on the one hand, between a clamping hook (3) and the associated clamping cavity (4) and, on the other hand, between a raised portion (13) and the associated opening (6).

9. Use of the arrangement according to one of the preceding claims to receive direction-dependent acceleration or roll-over sensors in motor vehicles.

## Revendications

1. Dispositif pour la fixation d'un boîtier (1) sur une plaque de fixation (2), dans lequel le boîtier (1) présente des crochets d'encliquetage (5) et la plaque de fixation (2) présente des ouvertures (6) pour loger les crochets d'encliquetage (5), **caractérisé en ce que** le boîtier (1) présente un crochet de serrage (3) et la plaque de fixation présente une poche de serrage (4) pour loger le crochet de serrage (3) et **en ce que**, pour la fixation du boîtier (1), est ménagée entre crochet de serrage (3) et poche de serrage (4) une fermeture mécanique au moyen d'une ou de plusieurs pointes (11) et cavités correspondantes (12).

2. Dispositif selon la revendication 1, **caractérisé en ce que** les pointes (11) sont disposées dans les crochets de serrage (3) et les cavités correspondantes (12) dans les poches de serrage (4).

3. Dispositif selon la revendication 1, **caractérisé en ce que** les pointes (11) sont disposées dans les poches de serrage (4) et les cavités correspondantes dans les crochets de serrage (3).

4. Dispositif selon l'une quelconque des revendications 1 à 3, **caractérisé en ce que** les pointes (11) sont en forme de cône tronqué.

5. Dispositif selon l'une quelconque des revendications 1 à 3, **caractérisé en ce que** les pointes (11) présentent une coupe transversale circulaire.

6. Dispositif selon l'une quelconque des revendications 1 à 3, **caractérisé en ce que** les pointes (11) présentent une coupe transversale triangulaire ou quadrangulaire.

7. Dispositif selon l'une quelconque des revendications 1 à 6, **caractérisé en ce que** dans la pointe (11) est effectuée une entaille (15).

8. Dispositif pour la fixation d'un boîtier (1) sur une plaque de fixation (2), dans lequel le boîtier (1) présente des crochets d'encliquetage (5) et la plaque de fixation (2) présente des ouvertures (6) pour loger les crochets d'encliquetage (5), **caractérisé en ce que** le boîtier (1) présente un crochet de serrage (3) et la plaque de fixation présente une poche de serrage (4) pour loger le crochet de serrage (3), **en ce que**, à côté de chaque crochet d'encliquetage (5) est disposée une protubérance (13) en forme de cône tronqué, et **en ce que**, pour la fixation du boîtier (1) une fermeture mécanique est ménagée d'un côté entre un crochet de serrage (3) et la poche de serrage (4) associée et d'un autre côté entre une protubérance (13) et l'ouverture (6) associée.

9. Application du dispositif selon l'une quelconque des revendications précédentes au logement de détecteurs directionnels d'accélération ou de retournement dans des véhicules automobiles.
